# EUROPÄISCHE PATENTANMELDUNG

(11) **EP 1 998 272 A2**
(43) Veröffentlichungstag der Anmeldung: **03.12.2008**
(21) Anmeldenummer: 08103448.0
(22) Anmeldetag: 09.04.2008
(51) Int. Cl.: G06K 9/66

(54) **Vorrichtung zur Bestimmung einer Objekt- und/oder Existenzwahrscheinlichkeit eines Suchobjekts in einem Auslesefenster eines Bildes, Verfahren sowie Computerprogramm**

(30) Priorität: 01.06.2007 DE 102007025620
(71) Anmelder: Robert Bosch GmbH, 70442 Stuttgart (DE)
(72) Erfinder: Withopf, Daniel, 97953 Koenigsheim (DE)

(57) **Zusammenfassung**

Die Probleme bei der praktischen Umsetzung der Objektdetektion bzw. - verfolgung liegen auch darin, dass die zugrunde liegenden Algorithmen keine absolut sicheren Ergebnisse liefern. So werden üblicherweise Grenzen festgesetzt, ab deren Überschreiten von der Existenz eines Suchobjekts ausgegangen wird, wobei die Definition der Grenzen erfahrungsgemäß schwierig ist.

Es wird eine Vorrichtung 1 zur Bestimmung einer Objekt- und/oder Existenzwahrscheinlichkeit eines Suchobjekts in einem Auslesefenster eines Bildes - nachfolgend zusammenfassend als Bildexistenzwahrscheinlichkeit bezeichnet - umfassend: eine Einrichtung zur Bestimmung eines Gütemaßes 8, 9, welches von der Bildexistenzwahrscheinlichkeit beeinflusst ist, eine Transformationseinrichtung 10, welche programmtechnisch und/oder schaltungstechnisch ausgebildet ist, das Gütemaß durch eine Transformationsvorschrift auf die Bildexistenzwahrscheinlichkeit abzubilden, wobei die Transformationsvorschrift durch Auswertung einer Testmenge von Bildern mit und ohne das Suchobjekt gebildet ist.

## Beschreibung

### Stand der Technik

Die Erfindung betrifft eine Vorrichtung, ein Verfahren sowie ein Computerprogramm zur Bestimmung einer Objekt- und/oder Existenzwahrscheinlichkeit eines Suchobjekts in einem Auslesefenster eines Bildes - nachfolgend zusammenfassend als Bildexistenzwahrscheinlichkeit bezeichnet -, wobei die Vorrichtung eine Einrichtung zur Bestimmung eines Gütemaßes, welches von der Bildexistenzwahrscheinlichkeit beeinflusst ist, und eine Transformationseinrichtung, welche programmtechnisch und/oder schaltungstechnisch ausgebildet ist, das Gütemaß durch eine Transformationsvorschrift auf die Bildexistenzwahrscheinlichkeit abzubilden, umfasst.

Bei der videogestützten Überwachung von Umgebungen, wie zum Beispiel öffentlichen Plätzen, Kreuzungen, aber auch Fahrzeugumgebungen relativ zu einem bewegten Fahrzeug, nehmen die Objektdetektion und die Objektverfolgung eines Suchobjekts oftmals eine wichtige Rolle ein. Bei der Objektdetektion wird ein Suchobjekt in einem Bild oder in einer Bildsequenz erstmalig gesucht, um dessen Anfangsposition feststellen zu können. Die Objektverfolgung beschäftigt sich üblicherweise damit, ein bereits - beispielsweise durch den Objektdetektor - gefundenes Suchobjekt über die Zeit bzw. über eine Sequenz von Bildern hinweg zu verfolgen.

Die Probleme bei der praktischen Umsetzung der Objektdetektion bzw. - verfolgung liegen auch darin, dass die zugrunde liegenden Algorithmen keine absolut sicheren Ergebnisse liefern. So werden üblicherweise Grenzen festgesetzt, ab deren Überschreiten von der Existenz eines Suchobjekts ausgegangen wird, wobei die Definition der Grenzen erfahrungsgemäß schwierig ist.

Ein üblicher Ansatz sieht beispielsweise vor, eine sogenannte Existenzwahrscheinlichkeit durch den Grad der Übereinstimmung des Suchobjekts mit einem Modell des Suchobjekts zu bestimmen. Beispielsweise wird bei einer Fahrzeugdetektion als Modell angenommen, dass bei dem Fahrzeug immer deutliche Unterkanten und/oder Seitenkanten vorhanden sind oder dass diese symmetrisch angeordnet sind. Je stärker die Kanten des Fahrzeugs im Bild zu sehen sind, desto größer wird die sogenannte Existenzwahrscheinlichkeit des Objekts angenommen. Dieser Ansatz führt allerdings bei Sonnenschein, wenn sehr starke Schattenkanten im Bild zu sehen sind, zu hohen, sogenannten Existenzwahrscheinlichkeiten und bei trübem Wetter und somit kontrastarmen Bildern zu sehr niedrigen sogenannten Existenzwahrscheinlichkeiten. Die Ergebnisse des Ansatzes, auf die geschilderte Weise die Existenzwahrscheinlichkeit über ein Modell des Suchobjekts zu bestimmen, sind somit stark abhängig von den Umgebungsbedingungen. Damit bilden diese sogenannten Existenzwahrscheinlichkeiten möglicherweise ein Gütemaß, jedoch keine Existenzwahrscheinlichkeit, die einer statistischen Überprüfung standhalten würde.

Die Offenlegungsschrift DE 103 45 948 A1 betrifft ein Verfahren zur Bewertung und zeitlichen Stabilisierung von Klassifizierungsergebnissen, welches im Wesentlichen darauf beruht, dass für die von einem computerunterstützt ablaufenden Klassifizierungsverfahren ausgegebenen Gütemaße über eine Art zeitliche Mittelung ein Konfidenzmaß berechnet wird. Mit diesem Vorgehen wird eine sprunghaft bzw. große Veränderung der Konfidenzmaße bezüglich einander folgenden Zeitschritten vermieden, so dass einzelne Ausreißer bei der Klassifizierung herausgefiltert werden. Die Bewertungsgrundlage zur Erstellung der Gütemaße ist durch diesen Ansatz jedoch nicht verbessert.

### Offenbarung der Erfindung

Erfindungsgemäß wird eine Vorrichtung zur Bestimmung einer Objekt- und/oder Existenzwahrscheinlichkeit eines Suchobjekts in einem Auslesefensters eines Bildes mit den Merkmalen des Anspruchs 1 und/oder den Merkmalen des Anspruchs 9, ein entsprechendes Verfahren mit den Merkmalen des Anspruchs 14, sowie ein Computerprogramm mit den Merkmalen des Anspruchs 15 vorgeschlagen.

Die erfindungsgemäße Vorrichtung ist zur Bestimmung einer Objekt- und/oder Existenzwahrscheinlichkeit eines Suchobjekts in einem Auslesefenster eines Bildes geeignet und/ausgebildet. Für eine vereinfachte Darstellung werden nachfolgend die Begriffe Objekt- bzw. Existenzwahrscheinlichkeit zusammenfassend als Bildexistenzwahrscheinlichkeit bezeichnet.

Das Bild, für das die Bildexistenzwahrscheinlichkeit des Suchobjekts bestimmt werden soll, ist vorzugsweise als eine zweidimensionale Matrix mit Werten, insbesondere 2-Bit-, 8-Bit-, 12-Bit, 16-Bit, 24-Bit, 32-Bit-Werten, und kann insbesondere als Schwarz-Weiß-, Graustufen- oder Farbbild vorliegen. Vorzugsweise ist das Bild Teil einer Bildsequenz, also Teil einer Abfolge von mehreren Bildern in vorzugsweise regelmäßigen, zeitlichen Abständen. Das Bild kann auch als ein Teilabschnitt einer größeren Datenmatrix oder als ein Teilbild ausgebildet sein.

Das Suchobjekt ist vorzugsweise als ein Gattungsobjekt realisiert, also zum Beispiel Auto, Mensch, Motorrad etc. Es kann jedoch auch als ein spezifisches Gattungsobjekt ausgebildet sein, wie zum Beispiel das Gesicht eines bestimmten Menschen, eine spezifische Fahrzeugart und dergleichen.

Die Bildexistenzwahrscheinlichkeit ist vorzugsweise als die Kenngröße definiert, die die Wahrscheinlichkeit angibt, dass das Suchobjekt in dem Auslesefenster des Bildes vorhanden ist. Die Bildexistenzwahrscheinlichkeit stellt dabei eine insbesondere leicht zu interpretierende Kenngröße dar und ist vorzugsweise als normierte und/oder normierbare Kenngröße realisiert. So ermöglicht die Bildexistenzwahrscheinlichkeit eine einfache Aussage beispielsweise dahingehend, dass das Suchobjekt mit einer 60 %-Wahrscheinlichkeit in dem Auslesefenster des Bildes vorhanden ist. Das Auslesefenster ist vorzugsweise als Suchrechteck ausgebildet, welches insbesondere durch sein Position im Bild und seine Größe definiert ist. Vorzugsweise bezieht sich die Existenzwahrscheinlichkeit damit auf einen Ort und eine Größe des Auslesefensters in dem Bild.

Die erfindungsgemäße Vorrichtung umfasst eine Einrichtung zur Bestimmung eines Gütemaßes, wobei das Gütemaß von der Bildexistenzwahrscheinlichkeit beeinflusst ist. Vorzugweise umfasst das Gütemaß eine Information über die Bildexistenzwahrscheinlichkeit, ist jedoch nicht als Bildexistenzwahrscheinlichkeit ausgebildet, sondern wird zusätzlich von anderen Einflüssen bestimmt, wie zum Beispiel die Konvergenz einer Berechnung etc.

Um eine Abbildung des Gütemaßes auf die Bildexistenzwahrscheinlichkeit zu erreichen, weist die Vorrichtung eine Transformationseinrichtung auf, die diese Transformation über eine Transformationsvorschrift umsetzt, wobei die Transformationsvorschrift vorzugsweise nicht-linear ausgebildet ist.

Erfindungsgemäß wird beansprucht, dass die Transformationsvorschrift durch Auswertung einer Testmenge von Bildern mit und ohne das Suchobjekt, also einer Testmenge mit positiven und negativen Beispielen, gebildet ist.

Die Erfindung sieht somit vor, dass die Vorrichtung ausgebildet ist, zunächst ein Gütemaß zu erstellen und dieses über eine Transformationsvorschrift auf Basis einer Auswertung einer Testmenge von Bildern in eine Kenngröße zu wandeln, die eine verwertbare Aussage über die Existenzwahrscheinlichkeit des Suchobjekts in dem Auslesefenster des Bildes enthält. Mit dieser Umsetzung wird sichergestellt, dass Fehler oder Störfaktoren, welche sich bei der Berechnung des Gütemaßes eingeschlichen haben, in effektiver Weise herausgefiltert werden. Die erfindungsgemäße Vorrichtung bestimmt somit die Bildexistenzwahrscheinlichkeit direkt anhand der Diskriminanzfähigkeit der Einrichtung zur Bestimmung des Gütemaßes.

Bei einer bevorzugten Ausführungsform der Erfindung ist die Einrichtung zur Bestimmung des Gütemaßes durch Auswertung einer Trainingsmenge mit und ohne das Suchobjekt, also einer Trainingsmenge mit positiven und negativen Beispielen, gebildet und/oder trainiert, wobei Testmenge und Trainingsmenge vorzugsweise keine gemeinsame Schnittmenge aufweisen. Diesem Aspekt der Erfindung folgend wird die Einrichtung zur Bestimmung eines Gütemaßes durch ein Lernverfahren beeinflusst, dass mit Hilfe der Trainingsmenge gebildet und/oder trainiert wird. Nach dem Training oder Bildung der Einrichtung zur Bestimmung eines Gütemaßes wird die Transformationsvorschrift durch Verwendung einer Testmenge gebildet. Hierbei wird das aus der Einrichtung zur Bestimmung des Gütemaßes erhaltene Gütemaß einer tatsächlichen Existenz des Suchobjekts in dem Auslesefenster des Bildes gegenüber gestellt und statistisch ausgewertet. Beispielsweise wird bei diesem Vorgehen eine Abbildungsvorschrift als Transformationsvorschrift gebildet, in der jedem Gütemaß eine Bildexistenzwahrscheinlichkeit zugeordnet ist.

Um die Bildexistenzwahrscheinlichkeiten aus den Ausgaben der Einrichtung zur Bestimmung eines Gütemaßes, insbesondere eines Objektdetektors, Objektverfolgers und/oder Mehrstufenklassifikators zu bestimmen, wird vorzugsweise eine Menge mit von der Trainingsmenge unabhängigen Testbeispielen verwendet. Die Grundlage für die Bestimmung der Bildexistenzwahrscheinlichkeit ist hierbei die Ausgabe der Einrichtung zur Bestimmung des Gütemaßes, die zum Beispiel eines skalare oder eine mehrdimensionale und/oder vektorielle Größe sein kann und bereits einen Anhaltspunkt für die Bildexistenzwahrscheinlichkeit des Suchobjekts in dem Bild angibt (zum Beispiel je größer die Ausgabe desto größer die Bildexistenzwahrscheinlichkeit). Mit Hilfe des Gütemaßes wird dann anhand der Testmengen die bedingte Wahrscheinlichkeit p(y = 1|x) bestimmt. Dies ist die Wahrscheinlichkeit, dass es sich bei einem Beispiel, für das die Einrichtung zur Bestimmung des Gütemaßes die Ausgabe x liefert, um ein positives Beispiel (y = 1) handelt. Für eine ideale Einrichtung zur Bestimmung des Gütemaßes ist diese Wahrscheinlichkeit monoton steigend, allerdings wird dies in der Praxis nur selten der Fall sein, wodurch sich ein starker Vorteil der Erfindung ergibt. Durch die Bestimmung der Bildexistenzwahrscheinlichkeit in Abhängigkeit des Gütemaßes auf einer unabhängigen Testmenge wird die Leistung der Einrichtung zur Bestimmung eines Gütemaßes nicht an ihrer unmittelbaren Ausgabe festgemacht, sondern unabhängig davon bestimmt. Es wird somit eine Transformation auf den Ausgabewert der Einrichtung zur Bestimmung eines Gütemaßes durchgeführt, der dann als Bildexistenzwahrscheinlichkeit interpretierbar ist.

Bei einer bevorzugten Weiterbildung der Erfindung ist die Einrichtung zur Bestimmung des Gütemaßes als Objektdetektor und/oder Objektverfolger ausgebildet. Wie bereits in der Einleitung erwähnt, bilden Objektdetektor und Objektverfolger wichtige Bestandteile bei der automatischen, videogestützten Überwachung von Umgebungen und sind damit oftmals bereits in derartigen Vorrichtungen integriert. Insbesondere sind der Objektdetektor und/oder der Objektverfolger ausgebildet, neben einer Position des Suchobjekts auch das Gütemaß auszugeben.

Bei einer besonders bevorzugten Weiterbildung der Erfindung ist die Einrichtung zur Bestimmung des Gütemaßes als Mehrstufenklassifikator ausgebildet bzw. der Objektdetektor und/oder der Objektverfolger umfassen insbesondere jeweils einen derartigen Mehrstufenklassifikator. Bei möglichen, vorteilhaften Ausführungsformen beruht der Mehrstufenklassifikator auf einem Boosting-Algorithmus, insbesondere AdaBoost, ReaIBoost oder GentleBoost.

Bei einer bevorzugten Ausprägung der Erfindung umfasst der Mehrstufenklassifikator eine Mehrzahl von Klassifikationseinrichtungen zur Zwischenklassifikation von Testobjekten in dem Bild, wobei die Klassifikationseinrichtung bzw. der Mehrstufenklassifikator programmtechnisch und/oder schaltungstechnisch ausgebildet sind, so dass die Klassifikationseinrichtungen hintereinander geschaltet sind und/oder schaltbar sind, wobei vorzugsweise ausschließlich positiv zwischenklassifizierte Testobjekte von einer ersten Klassifikationseinrichtung zu einer zweiten Klassifikationseinrichtung weitergebbar sind und/oder weitergegeben werden, wobei in einer, einigen oder allen der Klassifikationseinrichtungen eine Kenngröße, ein Zwischenklassifikationswert, auf Basis der jeweiligen Zwischenklassifikation gebildet wird.

Die Klassifikationseinrichtungen umfassen oder benutzen bevorzugt ein oder mehrere Merkmale, wobei zur Zwischenklassifikation der Zwischenklassifikationswert gebildet wird, der bevorzugt das Ergebnis der Anwendung von dem einem oder mehreren Merkmalen auf eines der Testobjekts umfasst. Der Zwischenklassifikationswert entspricht bevorzugt dem Ergebnis einer mathematischen Verknüpfung des Merkmals oder der Merkmale mit dem Testobjekt. Die Merkmale können beliebiger Art sein, bevorzugt sind die Merkmale jedoch als ein ein-, zwei- oder mehrdimensionales Feld, insbesondere Datenfeld ausgebildet. Dadurch, dass die Klassifikationseinrichtungen hintereinander geschaltet und/oder insbesondere während des Betriebs der Vorrichtung hintereinander schaltbar sind, werden vorzugsweise nur positiv zwischenklassifizierte Testobjekte von einer ersten Klassifikationseinrichtung zu einer zweiten Klassifikationseinrichtung weitergegeben bzw. sind weitergebbar. Testobjekte mit negativem Zwischenklassifikationen werden bevorzugt verworfen. Die Unterscheidung zwischen positiv und negativ zwischenklassifizierten Testobjekten wird vorzugsweise dadurch erreicht, dass der Betrag des Zwischenklassifikationswerts mit einem vorgegebenen Grenzwert verglichen wird.

Es ist des Weiteren bevorzugt, wenn das Gütemaß als Klassifikationsergebnis und/oder Zwischenklassifikationsergebnis und/oder kumulierte oder zusammengefasste Zwischenklassifikationsergebnisse von einer, einigen und/oder allen Klassifikationsstufen des Mehrstufenklassifikators gebildet ist. Damit hat das Gütemaß zwar eine starke Abhängigkeit von der Bildexistenzwahrscheinlichkeit des Suchobjekts in dem Auslesefenster des Bildes, ist jedoch zugleich noch von einer Vielzahl anderen Faktoren, insbesondere dem Aufbau des Mehrstufenklassifikators abhängig, so dass das Gütemaß ohne weitere signaltechnische Verarbeitung als Existenzwahrscheinlichkeit nicht aussagekräftig genug ist.

Bei einer besonders bevorzugten Ausführungsform ist vorgesehen, dass ein positiv zwischenklassifiziertes Testobjekt zusammen mit einer Kenngröße auf Basis der Zwischenklassifikation bzw. mit dem Zwischenklassifikationsergebnis von einer Klassifikationseinrichtung an eine nachfolgende Klassifikationseinrichtung übergeben wird. Bei dieser Weiterbildung wird davon ausgegangen, dass die zweite Klassifikationseinrichtung die übergebende Kenngröße zur Bewertung der eigenen Zwischenklassifikation verwendet, um somit die Qualität der eigenen Zwischenklassifikation zu verbessern. Zum einen vereinfacht sich die Aufgabe der zweiten und/oder der nachfolgenden Klassifikationseinrichtung, da sie bereits einen vorhandenen Zwischenklassifikationswert aus den vorhergehenden Klassifikationseinrichtungen nur noch verfeinern muss. Auf der anderen Seite beinhaltet der weitergegebene bzw. neu gebildete Zwischenklassifikationswert auch eine Aussage über die vorhergehenden Klassifikationseinrichtungen bzw. -stufen, so dass der Zwischenklassifikationswert sehr gut abgesichert ist.

Bei einer bevorzugten Ausführungsform der Erfindung sind die Klassifikationseinrichtungen in einer Baumstruktur und/oder einer Kaskade angeordnet und/oder anordenbar und repräsentieren die Knoten in der jeweiligen Struktur. Insbesondere bildet die zweite Klassifikationseinrichtung den oder einen Nachfolgerknoten zu der ersten Klassifikationseinrichtung. Die Baumstruktur ist bevorzugt dadurch gekennzeichnet, dass auf einen ersten Knoten nachfolgend und parallel zueinander mehrere weitere Nachfolgerknoten angeordnet sind, wobei insbesondere auf Basis der Kenngröße in dem ersten Knoten bestimmt wird, an welchen der parallel nachfolgenden Nachfolgerknoten das Testobjekt übergeben wird und/oder ob das Testobjekt verworfen wird. Hierdurch ist es auch möglich, mit dem erfindungsgemäßen Verfahren mehrere Arten oder Klassen von Testobjekten zu unterscheiden (z.B. die vier Klassen Auto/ / LKW / Motorrad und kein Fahrzeug), so dass die Vorrichtung optional mehrklassenfähig ausgebildet ist. Eine Kaskade ist bevorzugt durch eine rein und/oder ausschließlich serielle Anordnung der Knoten, insbesondere aller Knoten gekennzeichnet.

Eine weitere vorteilhafte Ausgestaltungen ist dadurch gegeben, dass die Klassifikationseinrichtungen als Gesamtklassifikatoren ausgebildet sind, welche einen oder mehrere Einzelklassifikatoren zur Unterklassifikation umfassen. Die Einzelklassifikatoren umfassen bevorzugt jeweils genau ein Merkmal, welches auf das jeweilige Testobjekt angewendet wird. Das Ergebnis der Anwendung des Merkmals auf das Testobjekt und/oder eine daraus abgeleitete Kenngröße ist der Unterklassifikationswert und bildet die Grundlage für die Unterklassifikation. Die verschiedenen Unterklassifikationen und/oder -werte werden zur Bildung des Zwischenklassifikationswertes zusammengefasst. Für die Zusammenfassung ist beispielsweise vorgesehen, dass die Einzelklassifikatoren eine Gewichtung aufweisen, so dass die Unterklassifikationswerte gewichtet in den Zwischenklassifikationswert eingehen. Besonders bevorzugt ist weiterhin, dass die Gesamtklassifikatoren in der hintereinandergeschalteten Reihenfolge eine monoton, insbesondere streng monoton steigende Anzahl von Einzelklassifikatoren aufweisen. Vorzugsweise weisen in der genannten Reihenfolge vorne angeordnete Gesamtklassifikatoren nur wenige Einzelklassifikatoren zur Erstellung einer Zwischenklassifikation auf und in der Reihenfolge weiter hinten angeordnete Gesamtklassifikatoren eine größere Anzahl von Einzelklassifikatoren auf. Nachdem negativ zwischenklassifizierte Testobjekte verworfen werden, werden von den hinteren Gesamtklassifikatoren nur noch eine geringe verbleibende Anzahl der ursprünglichen Testobjekte klassifiziert, so dass insgesamt Rechenzeit und/oder Rechenaufwand eingespart wird.

Es liegt eine bevorzugte Weiterbildung vor, wenn die Einzelklassifikatoren als binäre Klassifikatoren, also Klassifikatoren mit einem binären Wertebereich für die Unterklassifikationswerte, und/oder als insbesondere wahrscheinlichkeitsgestützte und/oder reelwertige Klassifikatoren ausgebildet sind, also Klassifikatoren mit einem mehrstufigen, insbesondere mehr als zweistufigen, und/oder reellen und/oder stufenlosen Wertebereich für die Unterklassifikationswerte. Die wahrscheinlichkeitsgestützten Klassifikatoren erzeugen gegenüber den binären Klassifikatoren eine genauere Aussage über die Unterklassifikation, so dass die Zwischenklassifikation auf einer besseren Grundlage durchgeführt wird.

In einer bevorzugten Ausführungsform ist der Mehrstufenklassifikator und/oder die Klassifikationseinrichtungen ausgebildet, so dass die Kenngröße auf Zwischenklassifikationswerten einer beliebigen, der ersten und/oder mehrerer Klassifikationseinrichtungen basiert und/oder diese umfasst. Bei dieser Ausführungsform wird nochmals die Idee unterstrichen, einer nachfolgenden Klassifikationseinrichtung Informationen über die Zwischenklassifikationswerte einer und/oder mehrerer vorhergehender Klassifikationseinrichtungen oder davon abgeleitete Werte zu übergeben. Indem die aktuelle Klassifikationseinrichtung über die vorhergehenden Zwischenklassifikationswerte und somit über die vorausgehende Zwischenklassifikation informiert ist, kann ein neuer Zwischenklassifikationswert besserer Qualität erzeugt werden. Bevorzugt ist die Kenngröße als Akkumulation der vorhergehenden Zwischenklassifikationswerte oder einer Teilmenge davon ausgebildet.

Insbesondere bei der Ausgestaltung zur Durchführung der Objektdetektion und/oder -verfolgung ist optional vorgesehen, dass zur Zwischenklassifikation und/oder Unterklassifikation und/oder zur Bestimmung des Gütemaßes Muster auf ein Integralbild angewandt werden. Zur Definition des Integralbildes wird auf den Artikel: Paul Viola und Michael Jones: Rapid object detection using a boosted cascade of simple features. In Proc. IEEE Conf. Computer Vision Pattern Reognition, Cambridge, GB, 2001 oder auf die Druckschrift DE 10 2005 038 603 A1 verwiesen, deren gesamte Offenbarung in die vorliegende Beschreibung via Referenzierung übernommen wird. Die Muster sind bevorzugt als zweidimensionale Datenfelder, insbesondere als Haar-Muster realisiert.

Ein weiterer Gegenstand der Erfindung bzw. eine Ergänzung betrifft eine Vorrichtung mit den Merkmalen des Anspruchs 9, welche optional das Merkmal aufweist, dass die Transformationsvorschrift durch Auswertung einer Testmenge von Bildern mit und ohne das Suchobjekt gebildet und/oder trainiert ist. Insbesondere ist hier offenbart, dass die Transformationsvorschrift auch beliebig anders, z.B. durch Ableitung aus der Architektur der Einrichtung zur Bestimmung des Gütemaßes gebildet werden kann. Beispielsweise kann ein Zusammenhang zwischen Gütemaß und Bildexistenzwahrscheinlichkeit bei einem Mehrstufenklassifikator abgeleitet werden, indem die Stufen des Mehrstufenklassifikators berücksichtigt werden. Bei diesem Vorgehen weisen beispielsweise Testobjekte eine geringere Bildexistenzwahrscheinlichkeit auf, die zwar von einer Klassifikationseinrichtung als positiv detektiert an eine nächste Klassifikationseinrichtung weitergegeben worden sind, jedoch von der nächsten Klassifikationseinrichtung mit einem sehr geringen Zwischenklassifikationswert verworfen werden.

Bei diesem Gegenstand der Erfindung wird ergänzend eine Korrektureinrichtung beansprucht, welche programmtechnisch und/oder schaltungstechnisch ausgebildet ist, die Bildexistenzwahrscheinlichkeit unter Verwendung weiterer Kenngrößen zu korrigieren.

Eine erste Alternative ist dadurch gegeben, dass die Bildexistenzwahrscheinlichkeit unter Verwendung einer Positionswahrscheinlichkeit korrigiert wird, wobei die Positionswahrscheinlichkeit die Wahrscheinlichkeit dafür angibt, dass sich das Suchobjekt an einer bestimmten Position in dem Bild befindet. Zur Veranschaulichung und beispielhaft sei ausgeführt, dass die Position des Suchobjekts in dem Bild oftmals nicht eindeutig feststellbar ist, sondern eher über eine manchmal Gauss-förmige Wahrscheinlichkeitsverteilung um eine Position in dem Bild verschwimmt. Berücksichtigt man nun sowohl die Positionswahrscheinlichkeit als auch die Bildexistenzwahrscheinlichkeit so kann durch Verknüpfung dieser beiden Wahrscheinlichkeiten die Bildexistenzwahrscheinlichkeit korrigiert werden. In einer sehr einfachen Ausführungsform wird die Bildexistenzwahrscheinlichkeit erhöht, wenn die Positionswahrscheinlichkeit hoch ist und dementsprechend erniedrigt, wenn die Positionswahrscheinlichkeit gering ist. Durch diese Ausprägung kann die Aussagekraft der Bildexistenzwahrscheinlichkeit deutlich gesteigert werden.

Bei einer weiteren Alternative und/oder Ergänzung wird der zeitliche Verlauf der Bildexistenzwahrscheinlichkeit berücksichtigt, wobei - wie in dem eingangs genannten Dokument DE 103 45 948 A1 die Bildexistenzwahrscheinlichkeit durch Filterung und/oder Glättung über die Zeit korrigiert wird.

Bei einer weiteren Alternative und/oder Ergänzung wird die Bildexistenzwahrscheinlichkeit anhand der Übereinstimmung der Veränderung des Suchobjektszustands mit einem (Bewegungs-)Modell korrigiert. Das (Bewegungs-)Modell beschreibt dabei die zeitliche Entwicklung des Suchobjektzustandes, vorzugsweise hinsichtlich der Bewegungsgeschwindigkeit, Position, Beschleunigung und dergleichen. Insbesondere wird der Suchobjekt-IST-Zustand mit einem über das Modell geschätzten Suchobjekt-SOLL-Zustand verglichen. Dabei wird die Tatsache ausgenutzt, dass Fehldetektionen eher zufällig entstehen und somit nicht dem Bewegungsmodell für das Suchobjekt entsprechen. Durch die Integration und/oder die Verknüpfung der Positions-/Zustandsschätzung in die Bildexistenzwahrscheinlichkeit kann sich eine solche schlechte Übereinstimmung mit dem Bewegungsmodell direkt auf die Bildexistenzwahrscheinlichkeit auswirken: Je besser die Übereinstimmung mit dem Bewegungsmodell ist, desto höher wird die Bildexistenzwahrscheinlichkeit.

Somit wird vorzugsweise die Bildexistenzwahrscheinlichkeit mit der Objektposition und/oder -zustand über die Zeit propagiert, wobei durch die gemeinsame Verarbeitung von Objektposition bzw. -zustand und Bildexistenzwahrscheinlichkeit eine korrigierte Bildexistenzwahrscheinlichkeit und optional eine korrigierte(r) Objektposition bzw. -zustand ermittelt wird.

Obwohl es prinzipiell möglich erscheint, die genannten Kenngrößen über eine analytische Beziehung oder ein analytisches Modell zu berücksichtigen, ist es jedoch bevorzugt, wenn die Korrektureinrichtung als adaptives Filter, als Kalman-Filter, Particle-Filter, neuronales Netz oder dergleichen ausgebildet ist. Die Korrektureinrichtung erhält als Eingangsdaten die Bildexistenzwahrscheinlichkeit, die Positionswahrscheinlichkeit sowie gegebenenfalls ein Bewegungsmodell des Suchobjekt und ist zur Verknüpfung dieser Eingangsdaten ausgebildet. Als Ausgangsströme wird eine korrigierte Bildexistenzwahrscheinlichkeit, eine korrigierte Positionswahrscheinlichkeit und/oder eine korrigierte Trajektorie des Suchobjekts bereitgestellt.

Bei einer bevorzugten Realisierung der erfindungsgemäßen Vorrichtung weist diese einen Objektdetektor und einen Objektverfolger auf, welche jeweils einen Mehrstufenklassifikator zeigen, wobei jeder Mehrstufenklassifikator zur Weitergabe eines derartigen Gütemaßes an die Transformationseinrichtung ausgebildet ist. Auf diese Weise erhält die Transformationseinrichtung pro Suchobjekt mindestens zwei Gütemaße, welche unabhängig voneinander erstellt worden sind. Gegebenenfalls können weitere Einrichtungen vorgesehen sein, welche weitere Gütemaße für das Suchobjekt generieren. Die Transformationseinrichtung ist vorzugsweise ausgebildet, so dass für jedes weitergegebene Gütemaß eine Bildexistenzwahrscheinlichkeit berechnet wird und/oder eine gekoppelte Bildexistenzwahrscheinlichkeit, zum Beispiel eine kumulierte Bildexistenzwahrscheinlichkeit, aus den weitergegebenen Gütemaßen gebildet wird. Diese Bildexistenzwahrscheinlichkeit(en) wird bzw. werden dann an die Korrektureinrichtung übergeben. Damit erhält die Korrektureinrichtung - analog wie die Transformationseinrichtung - für jedes Suchobjekt mindestens zwei Bildexistenzwahrscheinlichkeiten, die zur gegenseitigen Korrektur bzw. zur Korrektur der Positionswahrscheinlichkeit etc. einsetzbar sind.

Ein weiterer Gegenstand der Erfindung betrifft ein Verfahren zur Bestimmung eines Objekt- und/oder Existenzwahrscheinlichkeit eines Suchobjekts in einem Bild, vorzugsweise unter Verwendung der soeben beschriebenen Vorrichtung. Das Verfahren sieht vor, dass ein Gütemaß bestimmt wird, welches von der Bildexistenzwahrscheinlichkeit beeinflusst ist, wobei das Gütemaß durch eine Transformationsvorschrift auf eine Bildexistenzwahrscheinlichkeit abgebildet wird und wobei die Transformationsvorschrift durch Auswertung einer Testmenge von Bildern mit und ohne das Suchobjekt gebildet und/oder trainiert ist und/oder eine über die Transformationsvorschrift gebildete Bildexistenzwahrscheinlichkeit unter Verwendung einer Positionswahrscheinlichkeit, eines Bewegungsmodells, und/oder eines zeitlichen Ablaufs zu korrigieren. Vorzugsweise umfasst das erfindungsgemäße Verfahren die bestimmungsgemäße Verwendung der beschriebenen Vorrichtung.

Des Weiteren betrifft die Erfindung ein Computerprogramm mit Programmcode-Mitteln mit den Merkmalen des Anspruchs 15.

### Kurze Beschreibung der Zeichnungen

Weitere Merkmale, Vorteile und Wirkungen der Erfindung ergeben sich aus der nachfolgenden Beschreibung eines bevorzugten Ausführungsbeispiels sowie aus den Figuren. Dabei zeigen:
- Figur 1: ein Blockdiagramm einer erfindungsgemäßen Vorrichtung als ein erstes Ausführungsbeispiel der Erfindung;
- Figur 2: eine grafische Zuordnung von Gütemaßen und Bildexistenzwahrscheinlichkeiten zur Illustration einer Transformationsvorschrift in Verbindung mit der Vorrichtung gemäß Figur 1.

### Ausführungsform(en) der Erfindung

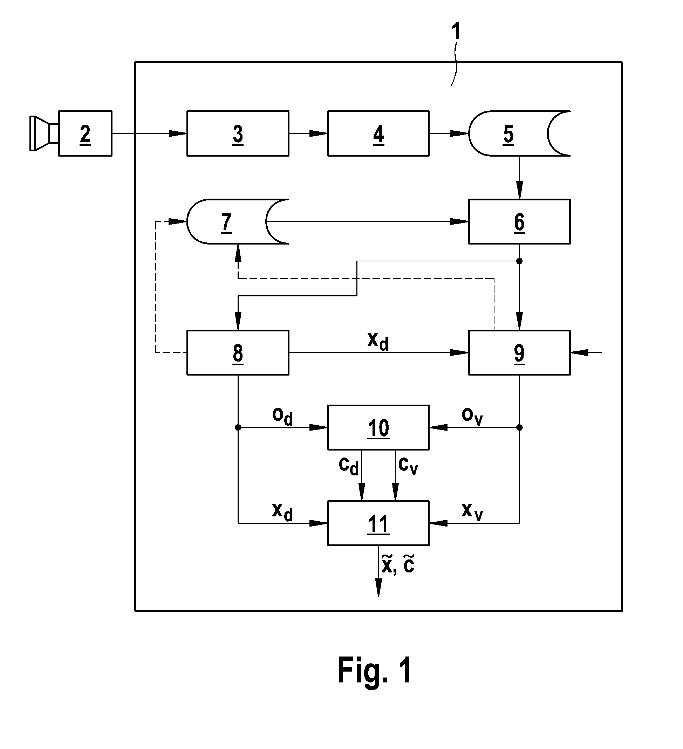

Die Figur 1 zeigt ein Ausführungsbeispiel einer Vorrichtung 1 zur Objektdetektion und/oder -verfolgung in einem schematischen Blockschaltbild. Die Vorrichtung 1 ist beispielsweise mit einer übergeordneten Verarbeitungseinheit, wie z.B. einem Fahrzeugassistenzsystem (Adaptive-Cruise-Control-Steuergerät), verschaltet.

Die Vorrichtung 1 ist mit einer Kamera 2 zur Aufnahme von Einzelbildern oder einer Bildsequenz verbunden, welche beispielsweise als CCD-, CMOS- oder Infrarotkamera ausgebildet ist. Der von der Kamera 2 empfangene Bilddatenstrom wird optional in einem Vorverarbeitungsmodul 3 zunächst vorverarbeitet (zum Beispiel Fixed-Pattern-Noise-Unterdrückung, Bildentrauschung, geometrische Verzeichnungskorrektur, radiometrische Korrektur, lineare oder nichtlineare Filterung, Beleuchtungskorrektur).

In einem nachgeschalteten Integrationsmodul 4 werden die Bilder der Bildsequenz in Integralbilder umgerechnet und in einen Integralbildspeicher 5 abgelegt. Die Vorverarbeitung und die Bildung des Integralbilds arbeiten im Allgemeinen auf den Bilddatenstrom (benötigen also nicht zwingend die Speicherung des vollen Bildes) und sind sehr gut in Hardware darstellbar, so dass Vorverarbeitungsmodul 3 und/oder Integrationsmodul 4 vorzugsweise als FPGA und/oder als festprogrammierte Steuereinheit ausgebildet sind. Zu der Erstellung des Integralbilds wird auf die Druckschrift DE 10 2005 038 603 A1 der Anmelderin verwiesen, deren Inhalt, insbesondere hinsichtlich der Erstellung eines oder des Integralbildes vollständig in die vorliegende Anmeldung integriert wird. Ergänzend wird zur Definition des Begriffs "Integralbild" auf die Druckschrift US 2002/0102024 A 1 verwiesen, deren Inhalt via Referenzierung ebenfalls in die vorliegende Anmeldung integriert wird.

Die Integralbilder werden dann einem Modul zur Merkmalsextraktion 6 übergeben, welche die Integralbilder auf das Vorliegen bestimmter Muster untersucht. Die Muster sind in einem Speicher für Muster 7 abgelegt und werden von dem Modul zur Merkmalsextraktion 6 abgefragt. Die Muster werden vorzugsweise nicht als Bilder gespeichert, sondern speicherplatzsparend über die Koordinaten der Eckpunkte der Rechtecke und die zu verwendenden Vorzeichen und Faktoren, wie sie auf das Integralbild angewendet werden. Insbesondere sind die Muster als sogenannte Haar-Muster ausgebildet.

Die Antworten auf die Muster in dem Musterspeicher 7 werden von dem Modul zur Merkmalsextraktion 6 als Merkmalswerte an einen Objektdetektor 8 und an einen Objektverfolger 9 übergeben, wobei beide die gleiche Menge und Auswahl an Merkmalswerten erhalten. Der Objektdetektor 8 hat die Aufgabe, mit Hilfe der Merkmalswerte ein Suchobjekt in einem Bild bzw. einer Bildsequenz initial oder erstmalig zu entdecken und die Position x_{d}, z.B. in Form eines das Suchobjekt umschreibendes Rechteck (Fenster) im Bild, an den Objektverfolger 9 weiterzugeben, so dass dieser das Suchobjekt über mehrere Bilder bzw. über die Bildsequenz verfolgen kann. Alternativ werden die Merkmalswerte des Suchobjekts an den Objektverfolger 9 übergeben. Die Muster in dem Speicher für Muster 7 können vorab festgelegt (gelernt oder trainiert) sein oder während des Betriebs im Speicher abgelegt werden, was durch die gestrichelten Linien ausgehend von Objektdetektor 8 und Objektverfolger 9 angedeutet ist. Beispielsweise kann der Objekt-Detektor 8 und/oder der Objektverfolger 9 diese Muster liefern, anpassen oder aus einem vorgegebenen Satz von Mustern auswählen.

Sowohl Objektdetektor 8 als auch Objektverfolger 9 weisen einen Mehrstufenklassifikator auf, welcher aus einer Mehrzahl von hintereinander geschalteten Einzelklassifikationseinrichtungen besteht, die beispielsweise kaskadenartig angeordnet sind.

Die Mehrstufenklassifikatoren sind so ausgebildet, dass ein Testobjekt, welches beispielsweise als ein Auslesefenster ausgebildet ist, nacheinander oder sequentiell mehrere Klassifikationseinrichtungen durchläuft und dabei jeweils mit einem Zwischenklassifikationswert zwischenklassifiziert wird. Bei einer beispielhaften Realisierung wird der Mehrstufenklassifikator auf etwa 40.000 Stellen in dem Bild angewendet, jeweils beschrieben durch die Position eines Suchrechtecks im Bild (z.B. die Lage der Mitte der Unterkante des Suchrechtecks) und seiner Größe (z.B. im Bereich von 12x12, 20x20 bis zu 200x200 Pixel als oftmals verwendete Größenordnungen). Für jede dieser Positionen/Größen wird der Mehrstufenklassifikator mehr oder weniger weit durchlaufen, wobei meist bereits nach der ersten oder der zweiten Klassifikationseinrichtung abgebrochen wird. Die Zwischenklassifikationswerte eines Durchlaufs durch den Mehrstufenklassifikator werden kumuliert oder bereits intern in dem Mehrstufenklassifikator weitergegeben, so dass als Ausgabewert vorzugsweise für jede Stelle bzw. Auslesefenster neben der Position des Auslesefensters in dem Bild bzw. in der Bildsequenz X_{d} bzw. Xᵥ ein Gütemaß O_{d} bzw. Oᵥ durch die Zwischenklassifikationswerte bzw. kumulierten Zwischenklassifikationswerte gebildet wird. Dieses Gütemaß O_{d} bzw. Oᵥ gibt einen Hinweis auf die Bildexistenzwahrscheinlichkeit, also die Wahrscheinlichkeit, dass sich das Suchobjekt tatsächlich in einem zu dem Gütemaß korrespondierenden Auslesefenster des Bildes befindet, entspricht dieser jedoch nicht.
Diese Gütemaße o_{d} bzw. Oᵥ werden an ein Modul zur Bestimmung der Bildexistenzwahrscheinlichkeit 10 weitergegeben, welche die Gütemaße über eine Transformationsvorschrift auf Bildexistenzwahrscheinlichkeiten abbildet.

Zur Bildung der Transformationsvorschriften wird gemäß der Erfindung ein Lern- oder Auswerteverfahren eingesetzt, so dass die Transformationsvorschrift durch Auswertung einer Testmenge von positiven und negativen Testbildern, sogenannten gelabelten Testbildern, gebildet wird. Hierzu werden bei dem vorliegendem Ausführungsbeispiel eine Testmenge von Bildern mit einem Gütemaß versehen und das Gütemaß dann auf eine Bildexistenzwahrscheinlichkeit abgebildet. Auf diese Weise wird eine Wahrscheinlichkeitsverteilung gebildet, indem untersucht wird, wie sich die positiven (oder negativen) Testbilder auf die Gütemaße verteilen.

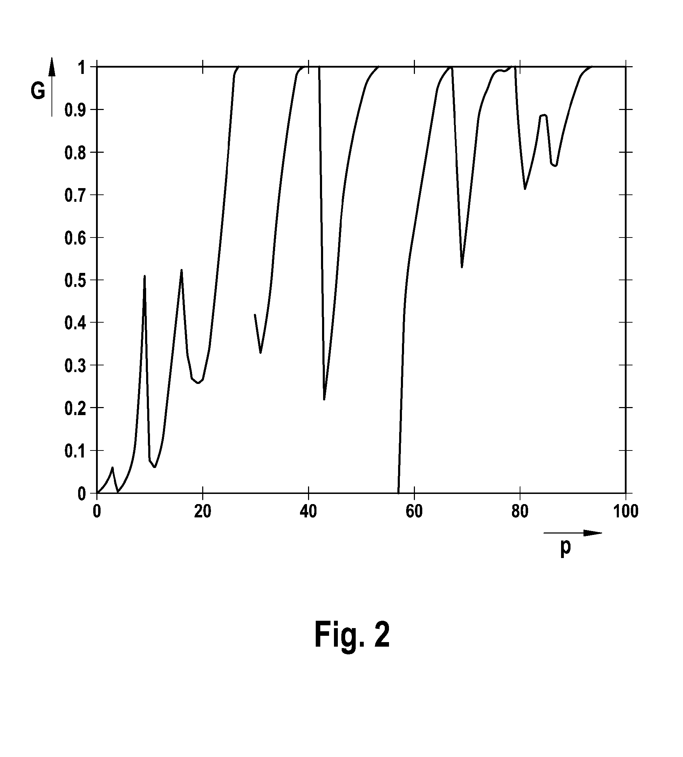

Das Ergebnis einer derartigen Abbildung ist in Figur 2 gezeigt, wobei die Figur 2 die Bildexistenzwahrscheinlichkeit in Abhängigkeit von dem Gütemaß, in diesem Fall der Ausgabe des Mehrstufenklassifikators zeigt. Auf der X-Achse ist dabei das Gütemaß G angegeben, welches Werte zwischen 0 und 100 einnehmen kann. Auf der Y-Achse ist dagegen die Bildexistenzwahrscheinlichkeit p normiert auf das Intervall zwischen Null und 1 dargestellt. Die Wahrscheinlichkeitsverteilung wurde gebildet, indem für eine gelabelte Testmenge zu jedem Wert auf der X-Achse abgezählt wurde, wie häufig das Suchobjekt in dem korrespondierenden Auslesefenster vorhanden war bzw. nicht vorhanden war. Bei einer beispielhaften Umsetzung wurde die Bedingung "Suchobjekt vorhanden/nicht vorhanden" durch eine Auswertung der Überlappung des Auslesefensters mit dem Rechteck, in dem sich gemäß a priori-Wissen das Suchobjekt befindet (Ground Truth), geprüft wurde. Zum einen ist es möglich die Bedingung durch die Definition einer Überlappungsschwelle zu prüfen, zum anderen kann der skalarwertige Überlappungsgrad selbst herangezogen werden. Wie sich aus der Auftragung ergibt, ist der Zusammenhang zwischen Gütemaß und Bildexistenzwahrscheinlichkeit stark nichtlinear, so dass eine Näherung, die beispielsweise darin bestehen könnte, die Gütemaße direkt als Bildexistenzwahrscheinlichkeit zu interpretieren, zu falschen Ergebnissen führen würde.
Der in der Figur 2 gezeigte Zusammenhang stellt damit eine Transformationsvorschrift dar, so dass beispielsweise ein Gütemaß mit dem Wert 20 auf eine Wahrscheinlichkeit von 0,3 abgebildet wird.

Das Modul zur Bestimmung der Bildexistenzwahrscheinlichkeit 10 erzeugt somit für die Eingabewerte O_{d} und eventuell Oᵥ durch Anwendung der Transformationsvorschrift eine als Bildexistenzwahrscheinlichkeit interpretierbare Ausgabe C_{d} und eventuell cᵥ. Diese Ausgaben werden an ein Modul zur Zustandsbestimmung 11 übergeben, welches neben dieser Eingabe auch eine Position des Suchobjekts in dem Bild x_{d} und/oder xᵥ sowie gegebenenfalls eine Wahrscheinlichkeit für die Position x_{d} bzw. xᵥ in dem Bild erhält.

Das Modul zur Zustandsbestimmung 11 propagiert bzw. filtert nun sowohl die Objektposition x_{d}, xᵥ, als auch die Existenzwahrscheinlichkeiten c_{d}, cᵥ, über die Zeit. Bevorzugt werden hierbei die Bildexistenzwahrscheinlichkeiten anhand der Güte der Positionsschätzung bzw. der Übereinstimmung der Objektbewegung mit einem hinterlegten Bewegungsmodell adaptiert. So spricht zum Beispiel die Tatsache, dass sich ein Objekt anhand des Bewegungsmodells verhält dafür, dass es sich um ein echtes Objekt und nicht um eine Fehldetektion handelt. Dieser Zusammenhang wird zur Korrektur der Bildexistenzwahrscheinlichkeit genutzt.

Das Modul zur Zustandsbestimmung 11 ist beispielsweise als ein adaptiver und/oder nicht-lineare Filter, insbesondere Kalman-Filter oder Particle-Filter ausgebildet. Die beiden Messpaare x_{d}, c_{d}, des Objektdetektors 8 und xᵥ, cᵥ des Objektverfolgers 9 werden dabei bevorzugt als zwei Messungen aufgefasst (zum Beispiel würde dann bei einem Kalman-Filter zweimal eine Aktualisierung mit einer Messung durchgeführt). Andere Varianten zur Integration der beiden Messpaare in die Filterung sind allerdings auch denkbar.

Als Ausgabewerte gibt das Modul zur Zustandsbestimmung 11 eine korrigierte (gefilterte) Bildexistenzwahrscheinlichkeit c und/oder eine korrigierte (gefilterte) Positionsbestimmung x̃ aus.

Während bei dem vorliegenden Ausführungsbeispiel sowohl der Objektdetektor 8 als auch der Objektverfolger 9 jeweils einen Positionswert x und ein Gütemaß o an das Modul zur Bestimmung der Bildexistenzwahrscheinlichkeit 10 bzw. an das Modul zur Zustandsbestimmung 11 übergeben hat, ist es bei einer vereinfachten Ausführungsform auch möglich, dass nur der Objektdetektor 8 bzw. nur der Objektverfolger 9 derartige Werte übergibt. Während das Ausführungsbeispiel auf ein Ein-Klassen-Problem bezogen ist, lässt sich das vorgeschlagene Verfahren bzw. die vorgeschlagene Vorrichtung auch auf ein Mehrklassenproblem anwenden bzw. anpassen.

## Patentansprüche

1. Vorrichtung (1) zur Bestimmung einer Objekt- und/oder Existenzwahrscheinlichkeit eines Suchobjekts in einem Auslesefenster eines Bildes
- nachfolgend zusammenfassend als Bildexistenzwahrscheinlichkeit bezeichnet - umfassend
eine Einrichtung zur Bestimmung eines Gütemaßes (8,9), welches von der Bildexistenzwahrscheinlichkeit beeinflusst ist,
eine Transformationseinrichtung (10), welche programmtechnisch und/oder schaltungstechnisch ausgebildet ist, das Gütemaß durch eine Transformationsvorschrift auf die Bildexistenzwahrscheinlichkeit abzubilden,
**dadurch gekennzeichnet,**
**dass** die Transformationsvorschrift durch Auswertung einer Testmenge von Bildern mit und ohne das Suchobjekt gebildet ist.

2. Vorrichtung (1) nach Anspruch 1, **dadurch gekennzeichnet, dass** die Einrichtung zur Bestimmung des Gütemaßes (8,9) durch Auswertung einer Trainingsmenge mit und ohne das Suchobjekt gebildet und/oder trainiert ist.

3. Vorrichtung (1) nach einem der vorhergehenden Ansprüche, **dadurch gekennzeichnet, dass** die Einrichtung zur Bestimmung des Gütemaßes als Objektdetektor (8) und/oder Objektverfolger (9) ausgebildet ist bzw. sind.

4. Vorrichtung (1) nach einem der vorhergehenden Ansprüche, **dadurch gekennzeichnet, dass** die Einrichtung zur Bestimmung des Gütemaßes (8,9) als Mehrstufenklassifikator ausgebildet ist und/oder dass der Objektdetektor (8) und/oder der Objektverfolger (9) einen oder den Mehrstufenklassifikator umfasst.

5. Vorrichtung (1) nach Anspruch 4, **dadurch gekennzeichnet, dass** das Gütemaß als Klassifikationsergebnis von einer, einigen und/oder allen Klassifikationsstufen des Mehrstufenklassifikators ausgebildet ist.

6. Vorrichtung (1) nach Anspruch 4 oder 5, **dadurch gekennzeichnet, dass** der Mehrstufenklassifikator eine Mehrzahl von Klassifikationseinrichtungen zur Zwischenklassifikation von Testobjekten in dem Bild aufweist, wobei die Klassifikationseinrichtungen programmtechnisch und/oder schaltungstechnisch ausgebildet sind, so dass die Klassifikationseinrichtungen hintereinander geschaltet sind und/oder schaltbar sind und nur positiv zwischenklassifizierte Testobjekte von einer ersten Klassifikationseinrichtung zu einer zweiten Klassifikationseinrichtung weitergebbar sind und/oder weitergegeben werden, wobei in einer, einigen oder allen der Klassifikationseinrichtungen eine Kenngröße bzw. ein Zwischenklassifikationswert auf Basis der jeweiligen Zwischenklassifikation gebildet wird.

7. Vorrichtung (1) nach Anspruch 6, **dadurch gekennzeichnet, dass** ein positiv zwischenklassifiziertes Testobjekt zusammen mit der Kenngröße auf Basis der Zwischenklassifikation bzw. dem Zwischenklassifikationsergebnisse von der ersten Klassifikationseinrichtung an die zweite Klassifikationseinrichtung übergeben wird.

8. Vorrichtung (1) nach einem der Ansprüche 6 oder 7, **dadurch gekennzeichnet, dass** das Gütemaß auf Basis der Kenngrößen der Zwischenklassifikation bzw. der Zwischenklassifikationsergebnisse der Klassifikationseinrichtungen gebildet ist.

9. Vorrichtung (1) nach Anspruch 1 und/oder dem Oberbegriff des Anspruchs 1, jeweils optional in Verbindung mit einer beliebigen Auswahl der Ansprüche 2 bis 8, **gekennzeichnet durch** eine Korrektureinrichtung (11), wobei die Korrektureinrichtung (11) programmtechnisch und/oder schaltungstechnisch ausgebildet ist, die Bildexistenzwahrscheinlichkeit unter Verwendung einer Positionswahrscheinlichkeit, welche als Kenngröße für die Wahrscheinlichkeit der Position des Testobjekts in dem Bild definiert ist,
und/oder
einem Bewegungsmodell
und/oder
einem zeitlichen Verlauf der Bildexistenzwahrscheinlichkeit und/oder der Positionswahrscheinlichkeit
zu korrigieren und als korrigierte Bildexistenzwahrscheinlichkeit auszugeben.

10. Vorrichtung (1) nach Anspruch 9, **dadurch gekennzeichnet, dass** die Korrektureinrichtung (11) als adaptives Filter, als Kalman-Filter, Particle-Filter, neuronales Netz oder dergleichen ausgebildet ist.

11. Vorrichtung (1) nach Anspruch 9 oder 10, **dadurch gekennzeichnet, dass** die Korrektureinrichtung als weitere Ausgabewerte eine korrigierte Positionswahrscheinlichkeit und/oder eine korrigierte Position des Suchobjekts in dem Bild bereitstellt.

12. Vorrichtung (1) nach einem der vorhergehenden Ansprüche, **dadurch gekennzeichnet, dass** die Vorrichtung (1) einen Objektdetektor (8) und einen Objektverfolger (9) aufweist, welche jeweils einen Mehrstufenklassifikator aufweisen, wobei jeder Mehrstufenklassifikator zur Weitergabe eines derartigen Gütemaßes an die Transformationseinrichtung (10) ausgebildet ist.

13. Vorrichtung nach Anspruch 12, **dadurch gekennzeichnet, dass** die Transformationseinrichtung (10) ausgebildet ist, für jedes weitergegebene Gütemaß eine Bildexistenzwahrscheinlichkeit zu berechnen oder eine gekoppelte Bildexistenzwahrscheinlichkeit aus den weitergegebenen Gütemaßen zu bilden und an die Korrektureinrichtung (11) zu übergeben.

14. Verfahren zur Bestimmung einer Objekt- und/oder Existenzwahrscheinlichkeit eines Suchobjekts in einem Auslesefenster eines Bildes - nachfolgend zusammenfassend als Bildexistenzwahrscheinlichkeit bezeichnet -, vorzugsweise unter Verwendung der Vorrichtung (1) nach einem der vorhergehenden Ansprüche, wobei ein Gütemaß bestimmt wird, welches von der Bildexistenzwahrscheinlichkeit beeinflusst ist, **dadurch gekennzeichnet, dass** das Gütemaß durch eine Transformationsvorschrift auf die Bildexistenzwahrscheinlichkeit abgebildet wird.

15. Computerprogramm mit Programmcode-Mitteln, um alle Schritte des Verfahrens nach Anspruch 14 durchzuführen, wenn das Programm auf einem Computer und/oder einer Vorrichtung (1) von jedem Beliebigen der Ansprüche 1 bis 13 ausgeführt wird.
